# EUROPEAN PATENT APPLICATION

(11) **EP 1 884 728 A1**
(43) Date of publication of application: **06.02.2008**
(21) Application number: 06015976.1
(22) Date of filing: 01.08.2006
(51) Int. Cl.: F25B 31/02, H02K 5/22

(54) **Terminal block assembly for the connection and control of sealed compressors particularly for home refrigerators**

(71) Applicant: ARYLUX S.p.A., 20148 Milano (IT)
(72) Inventor: Prochilo, Salvatore, 23883 Brivio (IT)
(74) Representative: Alagem Modiano, Lara S.

(57) **Abstract**

A terminal block assembly (1) for the connection and control of sealed compressors, particularly for home refrigerators and the like, comprising a bracket element (2) adapted to be connected to the body (3) of a compressor, a supporting body (6) which is adapted to be connected to the bracket element and to the fusite (5) of the compressor and supports a protector (8) and a starter (21) for the compressor, and a covering element (10) adapted to mate with the bracket element (2), for covering the supporting body (3) of the compressor, the covering element (10) being provided with elastically flexible means (24), which allow mating with a surface of the bracket element, the covering element (10) being adapted to abut at one end against the bracket element (2), in order to be turned, for closure, on the bracket element, by interference between the elastically flexible means (24) of the covering element (10) and a tooth (15) of the bracket element.

## Description

The present invention relates to a terminal block assembly for the connection and control of hermetic compressors particularly for home refrigerators. More particularly, the invention relates to a terminal block assembly that can be connected to the external enclosure of a sealed compressor for controlling and connecting it.

As is known, sealed compressors, particularly for refrigerators and the like, are provided with a terminal block assembly, which supports a starter and a protector and allows to connect the electric mains and at the same time to control the operation of the compressor, with a cable clamp to ensure the safety of the connections by fixing the cables appropriately, and with a cover for protecting said connections against dirt and water.

These elements are usually accommodated within a box-like enclosure, which protects them against impacts or other factors and is fixed externally with respect to the compressor.

Known solutions, for example US patent no. 6,375,439, disclose that the covering element of the terminal block assembly, which protects the fusite, is fitted so that it can slide tangentially with respect to body of the compressor. Moreover, said patent discloses the fact that some of the components of the terminal block assembly are provided monolithically, in order to reduce assembly costs and the space required to accommodate the compressor as a whole.

However, the solution cited above, though being functional from an operating standpoint, suffers the drawback that the covering element of the terminal block assembly, by having to be slid tangentially, entails, on the side of the heater, a correct positioning of the covering lens with respect to the mating support, so that the upper and lower guides are perfectly aligned between the support and the covering element, so as to produce the sliding of the covering element on the support.

This operation is not always easy to perform in tight spaces such as those usually available in refrigerators.

The aim of the present invention is to provide a terminal block assembly for the connection and control of sealed compressors, particularly for home refrigerators, in which the covering element of the terminal block assembly has a simplified engagement with respect to the known type of solution.

Within this aim, an object of the present invention is to provide a terminal block assembly for the connection and control of sealed compressors in which the components of the terminal block assembly are to a large extent integrated in a single component in order to facilitate assembly and reduce costs.

Another object of the present invention is to provide a terminal block assembly for the connection and control of sealed compressors that allows to accommodate both a motor protector and a conventional or electronic starter.

Within this aim, an object of the present invention is to provide a terminal block assembly for the connection and control of sealed compressors that is highly reliable, relatively simple to provide and at competitive costs.

This aim and these and other objects, which will become better apparent hereinafter, are achieved by a terminal block assembly for the connection and control of sealed compressors, particularly for home refrigerators and the like, comprising a bracket element adapted to be connected to the body of a compressor, a supporting body which is adapted to be connected to said bracket element and to the fusite and supports a protector and a starter for said compressor, and a covering element adapted to mate with said bracket element, for covering the supporting body of said compressor, characterized in that said covering element is provided with elastically flexible means, which allow mating with a surface of said bracket element, said covering element being adapted to abut at one end against said bracket element, in order to be turned, for closure, on said bracket element, by interference between said elastically flexible means of said covering element and a tooth of said bracket element.

Further characteristics and advantages of the invention will become better apparent from the description of a preferred but not exclusive embodiment of the terminal block assembly according to the invention, illustrated by way of non-limiting example in the accompanying drawings, wherein:

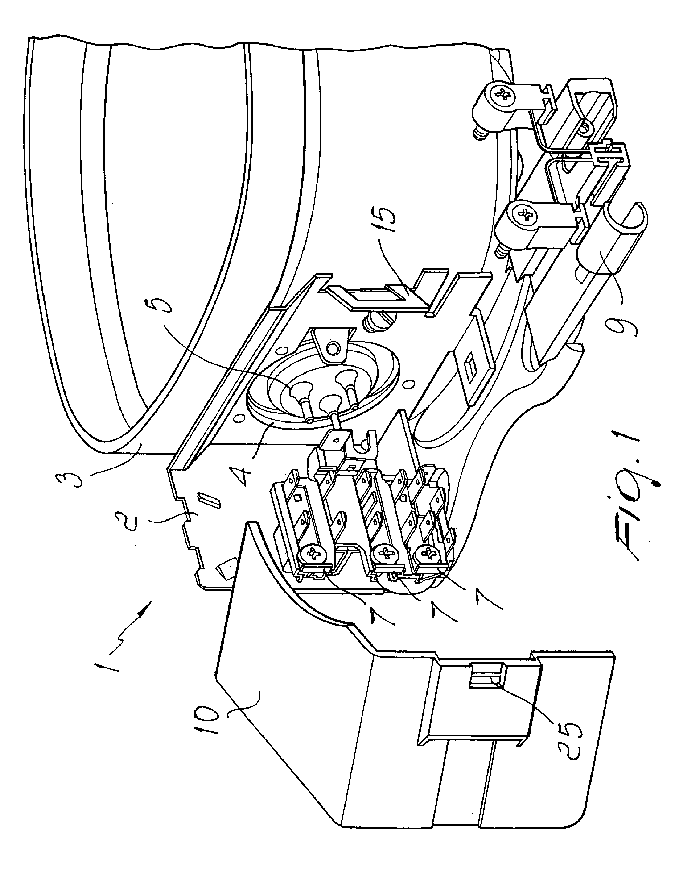

Figure 1 is a partially exploded perspective view of the terminal block assembly according to the present invention, connected to a compressor;

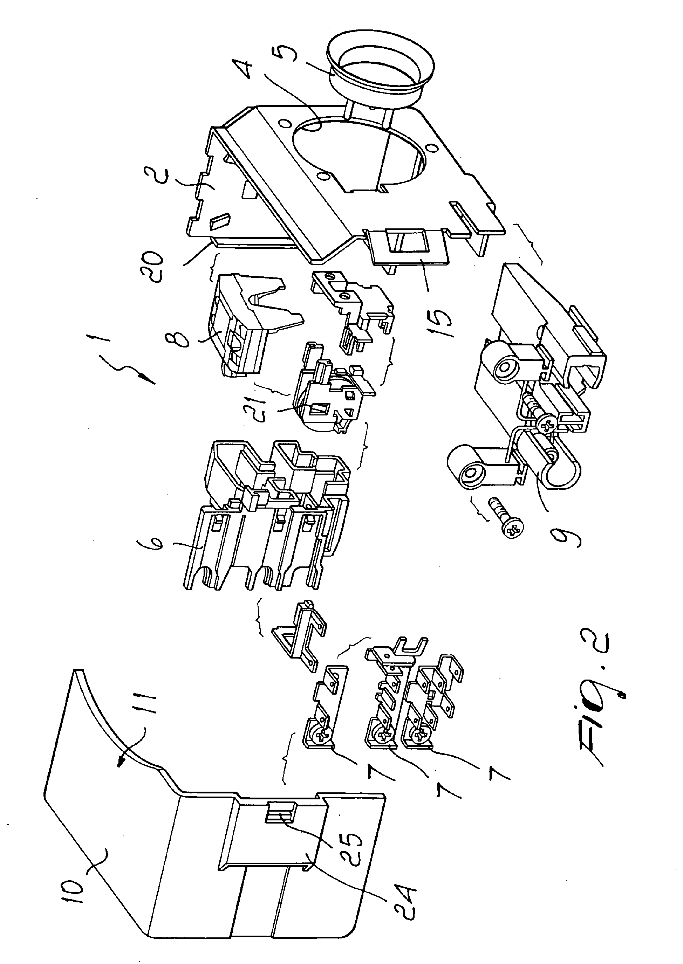

Figure 2 is an exploded perspective view of the terminal block assembly according to the present invention;
Figure 3 is a perspective view of the enclosure of the terminal block assembly according to the present invention, in the open condition;
Figure 4 is another perspective view of the covering enclosure of the terminal block assembly according to the present invention;
Figure 5 is another perspective view of a covering element of the terminal block assembly according to the present invention.

With reference to the figures, the terminal block assembly, generally designated by the reference numeral 1, comprises a bracket element 2, which is adapted to be connected to the body 3 of the compressor and is provided with a substantially circular opening 4, which allows to accommodate the fusite of the compressor, designated by the reference numeral 5.

The bracket element 2 is rigidly fixed to the body 3 of the compressor.

The bracket element 2 supports a body 6, which in turn supports terminals 7 for a motor protector 8 and a starter 21.

A cable clamp 9 is further provided for coupling to the bracket element 2.

The peculiarity of the invention resides in that a covering element 10 is provided, which is substantially L-shaped and is complementary to the L-shape of the bracket element 2, so as to provide, with an upper portion 11 thereof, a box-like enclosure, which encloses the motor protector, the starter, the terminal block and the fusite.

The covering element 10 is conveniently shaped so as to adapt to the profile of the bracket element 2.

In particular, the covering element 10 is provided, at one end (wall 13), with elastically flexible means, which are constituted conveniently by an elastically flexible portion 24, which is adapted to allow mating with the bracket element 2 and in particular with a tooth or tab 15. The wall 13 of the covering element 10 is provided internally with two ribs 14 and 16, which allow the engagement of the tooth 15.

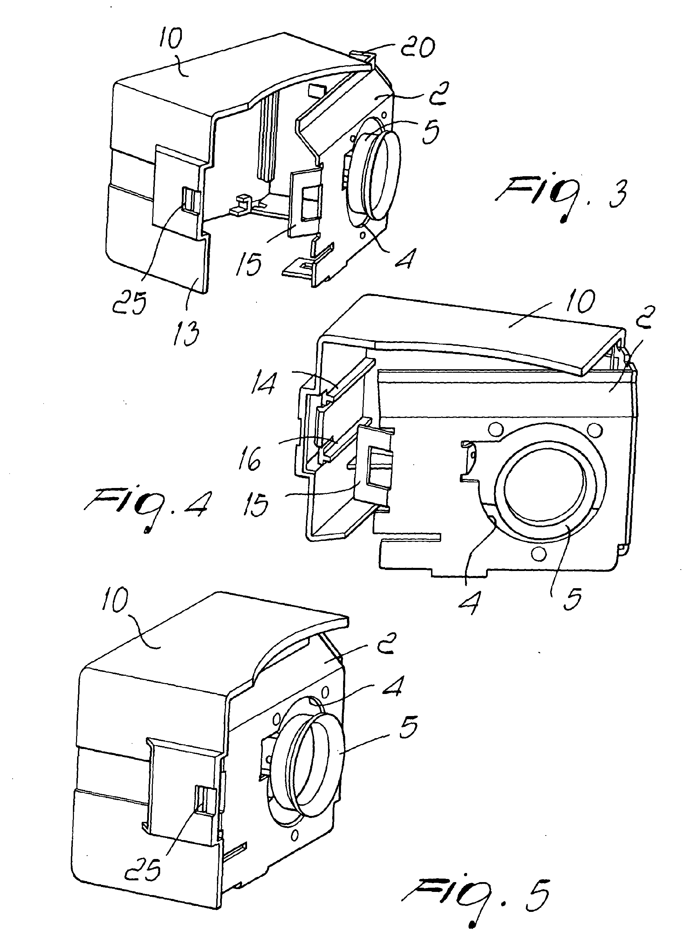

Substantially, the covering element 10 is arranged so as to abut against a folded edge 20 of the bracket element 2, arranging itself adjacent thereto and externally thereto, as shown in Figure 3, thus starting from an angled position, pivoting about the folded edge 20 of the bracket element 2.

At this point, the covering element 10 is moved into the closure position against the tooth 15, which slides internally along the ribs 14 and 16 during mating.

The wall 13 of the covering element 10 is provided conveniently with at least one slot 25, which allows the insertion of a pointed tool, in order to reach the tab 15 arranged behind the wall 13 and therefore allow to open the covering element 10 with respect to the bracket element 2, thus with a rotation of the covering element 10 as shown in Figures 3 and 4.

The final configuration, i.e., the covering element arranged so as to cover completely the bracket element 2, is as shown in Figure 5.

In practice, the invention allows the covering element 10 to be simply engaged with the bracket element 2, without having to necessarily align complementary guides of these two elements, but simply by resting the covering element 10 against a folded edge 20 of the bracket element 2 and then turning, in the closure direction, the covering element 10 with respect to the bracket element 2, so that the tooth 15 of the bracket element 2 engages against the internal wall of the covering element 10 that lies opposite the wall engaged with the folded edge 20, so as to perform closure by rotation of the covering element 10 on the bracket element 2.

The cable clamp 9 is fitted on the bracket element 2 tangentially with respect to the body of the compressor.

In practice it has been found that the terminal block assembly according to the present invention fully achieves the intended aim and objects, since it allows to cover easily the fusite housing, by means of the covering element, which can be coupled to a corresponding bracket element, which is rigidly coupled to the compressor, by performing merely a rotation of the covering element with respect to the bracket element, with the tooth of the bracket element engaged against the internal surface of a wall of the covering element.

This provides extremely simplified assembly and the operator, despite working in tight spaces, can easily open and close the covering element, acting even without visual access, since it is not necessary to worry about aligning the guiding elements provided on both of the elements to be mated.

The terminal block assembly thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A terminal block assembly for the connection and control of sealed compressors, particularly for home refrigerators and the like, comprising a bracket element adapted to be connected to the body of a compressor, a supporting body which is adapted to be connected to said bracket element and to the fusite of the compressor and supports a protector and a starter for said compressor, and a covering element adapted to mate with said bracket element, for covering the supporting body of said compressor, **characterized in that** said covering element is provided with elastically flexible means, which allow mating with a surface of said bracket element, said covering element being adapted to abut at one end against said bracket element, in order to be turned, for closure, on said bracket element, by interference between said elastically flexible means of said covering element and a tooth of said bracket element.

2. The terminal block assembly according to claim 1, **characterized in that** said elastically flexible means of said covering element comprise an elastically flexible portion, which is arranged at a wall of said covering element and is adapted to engage by interference with said tooth arranged at one end of said bracket element.

3. The terminal block assembly according to claim 1, **characterized in that** the elastically flexible portion of said covering element adapted to engage with said tooth is provided with at least one slot to allow the insertion of a tip of a tool.

4. The terminal block assembly according to one or more of the preceding claims, **characterized in that** the wall of the covering element with which said tooth of the bracket element engages by interference is provided internally with a pair of ribs.

5. The terminal block assembly according to claim 1, **characterized in that** it comprises a cable clamp adapted to be fitted on said bracket element, tangentially with respect to the body of the compressor.
